# EUROPÄISCHE PATENTSCHRIFT

(11) **EP 3 571 245 B1**
(45) Veröffentlichungstag und Bekanntmachung des Hinweises auf die Patenterteilung: **30.09.2020**
(21) Anmeldenummer: 18700509.5
(22) Anmeldetag: 19.01.2018
(51) Int. Cl.: C08K 3/04, C08K 5/09, C08K 5/103, C08K 7/22, C08K 7/24

(54) **GRAPHIT-HALTIGE POLYCARBONAT-ZUSAMMENSETZUNGEN ENTHALTEND EIN NEUARTIGES FLIESSHILFSMITTEL**
GRAPHITE-CONTAINING POLYCARBONATE COMPOSITIONS CONTAINING A NOVEL FLOW ADDITIVE
COMPOSITIONS DE POLYCARBONATE À BASE DE GRAPHITE CONTENANT UN NOUVEL AGENT ANTIAGGLOMÉRANT

(30) Priorität: 23.01.2017 EP 17152566
(43) Veröffentlichungstag der Anmeldung: 27.11.2019
(73) Patentinhaber: Covestro Intellectual Property GmbH & Co. KG, 51373 Leverkusen (DE)
(72) Erfinder: WEHRMANN, Rolf, 47800 Krefeld (DE); HEUER, Helmut, Werner, 57074 Siegen (DE); BOUMANS, Anke, 47574 Goch (DE)
(74) Vertreter: Levpat
(86) Internationale Anmeldenummer: PCT/EP2018/051346
(87) Internationale Veröffentlichungsnummer: WO 2018/134371

(56) Entgegenhaltungen:
- EP-A1- 1 318 175
- EP-A1- 2 840 117
- WO-A1-2015/135958
- WO-A1-2016/087295
- WO-A1-2017/005735

## Beschreibung

Die vorliegende Erfindung betrifft thermisch leitfähige, Graphit-haltige Polycarbonatzusammensetzungen, also solche Zusammensetzungen, deren überwiegend vorhandene Polymerkomponente Polycarbonat ist, mit hoher Fließfähigkeit. Weiterhin betrifft die Erfindung Formteile aus diesen Zusammensetzungen.

Thermisch leitfähige Polycarbonatzusammensetzungen werden insbesondere in der Elektro- und Elektronikindustrie zum Wärmemanagement eingesetzt, beispielsweise für Wärmesenken, Kühlkörper oder Gehäuse im LED-Bereich, für Spulenummantelungen oder Gehäuse von Festplatten oder anderen Massenspeichern, Schaltungsträger bei dreidimensionalen MID-Anwendungen oder in der Aufbau- und Verbindungstechnik zur Wärmeabfuhr elektronischer Bauteile.

Die thermische Leitfähigkeit von Polycarbonatzusammensetzungen lässt sich durch den Zusatz eines thermisch leitfähigen Füllstoffs, üblicherweise ein Graphit, insbesondere ein expandierter Graphit, erreichen. Durch die für die Erzielung einer relevanten thermischen Leitfähigkeit notwendige Zugabemenge an Graphit sind die Schmelzeviskositäten der Zusammensetzungen aber so hoch, dass für eine Verarbeitung der Zusammensetzungen der Zusatz eines Additivs zur Fließverbesserung erforderlich ist.

Für die Herstellung dünnwandiger Gehäuseteile oder die Herstellung von Bauteilen mit längeren Fließwegen, insbesondere von solchen mit einer Wandstärke kleiner 3 mm, ist eine niedrige Schmelzeviskosität erforderlich, damit die Spritzgussform beim Herstellprozess der Bauteile vollständig gefüllt wird und Bauteile durch Extrusionsverfahren mit gleichmäßiger Wandstärke realisiert werden können. Niedrige Schmelzeviskositäten sind des Weiteren bei der Realisierung von einteiligen Bauteilen komplexeren Aufbaus aus einem Material wesentlich, wie beispielsweise von Kühlkörpern (Heat Sinks), die sowohl über einen massiven dickeren Sockel als auch über dünne Kühllamellen/Kühlrippen verfügen. Auch bei der Herstellung von Bauteilen durch Extrusion, z. B. von Rohren, Profilen oder Platten, wird eine ausreichende Fließfähigkeit gefordert, da aufgrund der guten thermischen Leitfähigkeit eine schnelle Abkühlung der Polymerschmelze erfolgt.

Herkömmlich wird zur Fließverbesserung und als Flammschutzmittel Bisphenol A-Diphosphat (BDP) verwendet, und zwar in Mengen von bis zu mehr als 10 Gew.-%, um den gewünschten Effekt zu erzielen. Dadurch wird aber die Wärmeformbeständigkeit stark herabgesetzt, was sich nachteilig auf die Bauteileigenschaften auswirkt. Dies zeigen JP 201178889 A und WO 2015/135958 A1, in denen jeweils thermoplastische Zusammensetzungen, enthaltend expandierten Graphit und eine Phosphorverbindung, beschrieben werden. Die dort beschriebenen Systeme weisen stark reduzierte Wärmeformbeständigkeiten auf. Das Dokument EP 2 840 117 A1 beschreibt Polycarbonatzusammensetzungen mit verbesserter Fließfähigkeit. Als Gleit- und Entformungsmittel wird eine Monocarbonsäure wie Stearinsäure oder Palmitinsäure verwendet.

WO 2016/087295 A1 und WO 2016/087296 A1 beschreiben transparente bzw. Glasfaser enthaltende Polycarbonatzusammensetzungen, die Diglycerolester als Fließverbesserer enthalten. Durch Diglycerolester lässt sich bereits eine gute Fließverbesserung erzielen. Die Wärmeformbeständigkeit ist jedoch auch bei solchen Zusammensetzungen weiter verbesserungsbedürftig.

WO 2017/005735 A1 beschreibt gut fließfähige Zusammensetzungen auf Basis von aromatischem Polycarbonat, enthaltend Graphit. Als Fließverbesserer sind Diglycerolester zugesetzt. Zwar lassen sich so gute Fließfähigkeiten erzielen, jedoch ist es erstrebenswert, die Wärmeformbeständigkeit weiter zu verbessern.

Aufgabe der vorliegenden Erfindung war es somit insbesondere, die Fließfähigkeit von thermisch leitfähigen Polycarbonatzusammensetzungen bei möglichst guten Wärmeformbeständigkeiten (Vicat-Temperaturen und HDT (heat distortion temperature)) weiter zu verbessern und entsprechende Polycarbonatzusammensetzungen bereitzustellen. Überraschenderweise wurde nun gefunden, dass diese Aufgabe durch die Verwendung von Gemischen aus Monocarbonsäuren und deren Glycerol- und/oder Diglycerolester in thermisch leitfähigen Polycarbonatzusammensetzungen, enthaltend Graphit, gelöst wird. Die Wärmeformbeständigkeit, ermittelt anhand der Vicat-Temperatur, bleibt bei Zusatz dieser Gemische nahezu unverändert erhalten.

Die erfindungsgemäßen Zusammensetzungen, enthaltend die Carbonsäuren und deren Glycerol- und/oder Diglycerolester, zeigen verbesserte rheologische Eigenschaften, und zwar eine verbesserte Schmelzeviskosität, bestimmt nach ISO 11443:2014-04, im Vergleich zu entsprechenden Zusammensetzungen, die ansonsten dieselben Komponenten außer dem Gemisch aus Carbonsäuren und deren Glycerol- und/oder Diglycerolester enthalten. Dabei zeichnen sich die Zusammensetzungen bevorzugt durch eine gute Wärmeformbeständigkeit aus, messbar anhand der Vicat-Temperatur und der HDT.

Die Aufgabe wird gelöst durch Polycarbonatzusammensetzungen, enthaltend
A) 50 bis 95 Gew.-%, bevorzugt 60 bis 94 Gew.-%, weiter bevorzugt 63 bis 94 Gew.-%, besonders bevorzugt 63 bis 77 Gew.-% aromatisches Polycarbonat,
B) 3 bis 40 Gew.-%, bevorzugt 4 bis 36 Gew.-%, weiter bevorzugt 5 bis 35 Gew.-%, besonders bevorzugt 20 bis 35 Gew.-%, ganz besonders bevorzugt 25 bis 35 Gew.-% Graphit und
C) 0,05 Gew.-% bis 5,0 Gew.-%, bevorzugt 0,2 bis 3,0 Gew.-%, weiter bevorzugt 0,5 bis 2,0 Gew.-%, besonders bevorzugt 0,6 bis 1,8 Gew.-% eines Gemischs, enthaltend wenigstens eine gesättigte oder ungesättigte Monocarbonsäure mit einer Kettenlänge von 6 bis 30 C-Atomen und wenigstens einen Ester dieser Monocarbonsäure auf Basis von Glycerol und/oder Diglycerol.

Die Zusammensetzung kann neben den Komponenten A, B und C weitere Komponenten, etwa Thermo- und/oder Umesterungsstabilisatoren als Komponente D und/oder weitere Additive in Form von Komponente E, enthalten. Ebenso kann die Zusammensetzung einen oder mehrere weitere Thermoplasten enthalten.

Weitere übliche Additive sind beispielsweise Entformungsmittel, Flammschutzmittel, Antidrippingmittel, Antioxidantien, anorganische Pigmente, Ruß, Farbmittel und/oder anorganische Füllstoffe wie Titandioxid, Silikate, Aluminiumsilikate, Talk, Kreide, Quarz, insbesondere in Pulverform, Wollastonit, Glimmer, Ton, Montmorillonit, Aluminiumoxid, Magnesiumoxid, Siliciumdioxid und/oder Bariumsulfat, alle jeweils alleine oder auch in Mischungen.

Bevorzugte Zusammensetzungen enthalten
A) 60 bis 95 Gew.-%, weiter bevorzugt bis 94 Gew.-%, aromatisches Polycarbonat,
B) 4 bis 36 Gew.-%, weiter bevorzugt 5 bis 35 Gew.-% Graphit,
C) 0,05 Gew.-% bis 5,0 Gew.-%, weiter bevorzugt 0,6 bis 1,8 Gew.-%, eines Gemischs, enthaltend wenigstens eine gesättigte oder ungesättigte Monocarbonsäure mit einer Kettenlänge von 6 bis 30 C-Atomen und wenigstens einen Ester dieser Monocarbonsäure auf Basis von Glycerol und/oder Diglycerol,
D) 0,0 Gew.-% bis 1,0 Gew.-% Thermostabilisator und/oder Umesterungsstabilisator und
E) 0,0 Gew.-% bis 30,0 Gew.-% weitere Additive.

Noch weiter bevorzugte Zusammensetzungen enthalten
A) 62 bis 95 Gew.-%, insbesondere 63 bis 94 Gew.-%, aromatisches Polycarbonat,
B) 4 bis 36 Gew.-%, insbesondere 5 bis 35 Gew.-%, Graphit,
C) 0,2 Gew.-% bis 3,0 Gew.-%, insbesondere 0,6 bis 1,8 Gew.-%, eines Gemischs, enthaltend wenigstens eine gesättigte oder ungesättigte Monocarbonsäure mit einer Kettenlänge von 6 bis 30 C-Atomen und wenigstens einen Ester dieser Monocarbonsäure auf Basis von Glycerol und/oder Diglycerol,
D) 0,005 bis 0,5 Gew.-% Thermostabilisator und/oder Umesterungsstabilisator und
E) 0,1 bis 30 Gew.-%, insbesondere 0,1 bis 25 Gew.-%, weitere Additive.

Besonders bevorzugt enthalten die Zusammensetzungen
A) 63 bis 77 Gew.-%, insbesondere bis 754 Gew.-%, aromatisches Polycarbonat,
B) 20 bis 36 Gew.-%, insbesondere 25 bis 35 Gew.-% Graphit,
C) 0,5 Gew.-% bis 2,0 Gew.-%, insbesondere 0,6 bis 1,8 Gew.-% eines Gemischs, enthaltend wenigstens eine gesättigte oder ungesättigte Monocarbonsäure mit einer Kettenlänge von 6 bis 30 C-Atomen und wenigstens einen Ester dieser Monocarbonsäure auf Basis von Glycerol und/oder Diglycerol,
D) 0,01 bis 0,2 Gew.-% Thermostabilisator und/oder Umesterungsstabilisator und
E) 0,2 bis 15 Gew.-% weitere Additive.

Bevorzugt enthalten die erfindungsgemäßen Zusammensetzungen neben den Komponenten A bis C und ggf. einer oder mehreren der Komponenten D und/oder E wie Entformungsmitteln Flammschutzmitteln, Antidrippingmitteln, Antioxidantien, anorganischen Pigmenten, Ruß, Farbmitteln und/oder anorganischen Füllstoffen wie Titandioxid, Silikaten, Aluminiumsilikaten, Talk, Kreide, Quarz, insbesondere in Pulverform, Wollastonit, Glimmer, Ton, Montmorillonit, Aluminiumoxid, Magnesiumoxid, Siliciumdioxid und/oder Bariumsulfat keine weiteren Komponenten, d.h. die Mengen der Komponenten A, B, C und ggf. D und/oder E ergänzen sich zu 100 Gew.-%, d.h. die Zusammensetzung besteht aus den Komponenten A, B, C und ggf. D und/oder E.

Für Anwendungen, bei denen nicht so hohe thermische Leitfähigkeiten benötigt werden, kann der Graphitgehalt reduziert werden und durch Füllstoff ausgetauscht werden.

Alternativ bevorzugte Zusammensetzungen enthalten daher
A) 60 bis 75 Gew.-%, weiter bevorzugt 63 bis 70 Gew.-% Gew.-%, aromatisches Polycarbonat,
B) 3 bis 20 Gew.-%, weiter bevorzugt 5 bis 15 Gew.-%, Graphit,
C) 0,2 Gew.-% bis 3,0 Gew.-%, weiter bevorzugt 0,6 bis 1,8 Gew.-% eines Gemischs, enthaltend wenigstens eine gesättigte oder ungesättigte Monocarbonsäure mit einer Kettenlänge von 6 bis 30 C-Atomen und wenigstens einen Ester dieser Monocarbonsäure auf Basis von Glycerol und/oder Diglycerol,
D) 0,005 bis 0,5 Gew.-% Thermostabilisator und/oder Umesterungsstabilisator und
E) 12 bis 35 Gew.-% weitere Additive. Dabei enthalten diese Zusammensetzungen besonders bevorzugt 14 bis 32 Gew.-% eines Füllstoffs. Ganz besonders bevorzugt umfasst die Komponente e 15 bis 30 Gew.-% Talk.

Alle vorstehend beschriebenen Zusammensetzungen enthalten als Komponente C bevorzugt mehr als 50 Gew.-% an Ölsäureestern des Glycerols und/oder Diglycerols, bezogen auf das Gesamtgewicht des Gemischs C, wobei weiter bevorzugt Ölsäure den größten Anteil an freien Carbonsäuren stellt.

Als Graphit ist bevorzugt expandierter Graphit, weiter bevorzugt mindestens 70 Gew.-%, noch weiter bevorzugt mindestens 90 Gew.-%, besonders bevorzugt ausschließlich expandierter Graphit, bezogen auf die Gesamtmenge Graphit in der Zusammensetzung, enthalten.

Im Rahmen der vorliegenden Erfindung beziehen sich die Mengenangaben der Komponenten A, B, C und ggf. D und/oder E in Gew.-% - soweit nicht explizit anders angegeben - jeweils auf das Gesamtgewicht der Zusammensetzung.

Ganz besonders bevorzugt enthält die Zusammensetzung keine weiteren Komponenten, sondern die Komponenten A bis C und ggf. D und/oder E ergänzen sich zu 100 Gew.-%, d.h. die Zusammensetzung besteht aus den Komponenten A, B, C und ggf. D und/oder E.

Die Zusammensetzungen, in welchen auf erfindungsgemäße Weise die Fließfähigkeit verbessert wird, werden vorzugsweise zur Herstellung von Formteilen verwendet. Wegen der verbesserten Fließfähigkeit sind sie besonders zur Herstellung von dünnen und oder komplexen dreidimensionalen Bauteilen geeignet. "Dünne" Formteile im Sinne der vorliegenden Erfindung sind solche, bei denen Wandstärken an den dünnsten Stellen von weniger als etwa 3 mm, bevorzugt weniger als 3 mm, weiter bevorzugt von weniger als 2,5 mm, noch weiter bevorzugt von weniger als 2,0 mm, ganz besonders bevorzugt von weniger als 1,5 mm vorliegen. "Etwa" bedeutet hierbei, dass der tatsächliche Wert nicht wesentlich vom genannten Wert abweicht, wobei eine Abweichung von nicht größer als 25%, bevorzugt nicht größer als 10%, als "nicht wesentlich" gilt. Gegenstand der Erfindung sind daher auch entsprechende Formteile enthaltend bzw. bestehend aus diese(n) Zusammensetzungen. Komplexe dreidimensionale Bauteile sind beispielsweise Kühlkörper, die sowohl dickere (Sockel) als auch dünnere Bereiche (Kühlrippen) aufweisen.

Die einzelnen Bestandteile der erfindungsgemäßen Zusammensetzungen sind im Folgenden noch näher erläutert:

### Komponente A

Unter "Polycarbonat" werden erfindungsgemäß sowohl Homopolycarbonate als auch Copolycarbonate, insbesondere aromatische, verstanden. Dabei können die Polycarbonate in bekannter Weise linear oder verzweigt sein. Erfindungsgemäß können auch Mischungen von Polycarbonaten verwendet werden.

Ein Teil, bis zu 80 Mol-%, vorzugsweise von 20 Mol-% bis zu 50 Mol-%, der CarbonatGruppen in den erfindungsgemäß eingesetzten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung unter dem Oberbegriff der thermoplastischen, aromatischen Polycarbonate subsumiert.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Die thermoplastischen Polycarbonate einschließlich der thermoplastischen, aromatischen Polyestercarbonate haben mittlere Molekulargewichte M_{w}, bestimmt mittels Gelpermeationschromotographie nach DIN 55672-1:2007-08, kalibriert gegen Bisphenol A-Polycarbonat-Standards unter Verwendung von Dichlormethan als Elutionsmittel, von 10.000 g/mol bis 32.000 g/mol, vorzugsweise von 12.000 g/mol bis 31.000 g/mol, insbesondere von 15.000 g/mol bis 31.000 g/mol.

Die Kalibrierung erfolgte mit linearen Polycarbonaten (aus Bisphenol A und Phosgen) bekannter Molmassenverteilung (469 g/mol bis ca. 100.000 g/mol) der PSS Polymer-Standards Service GmbH, Deutschland. Für die Kalibrierung wurde die Methode 2301-0257502-09D (aus dem Jahre 2009 in deutscher Sprache) der Currenta GmbH & Co. OHG, Leverkusen angewandt. Dichlormethan wurde als Elutionsmittel verwendet. Die Säulenkombination bei der Gelpermeationschromotographie bestand aus vernetzten Styrol-Divinylbenzolharzen. Die fünf analytischen Säulen hatten einen Durchmesser von 7,5 mm und eine Länge von 300 mm. Die Partikelgrößen des Säulenmaterials lag im Bereich von 3 µm bis 20 µm. Die Konzentration der untersuchten Lösungen betrug 0,2 Gew.-%. Die Flussrate wurde auf 1,0 ml/min eingestellt, die Temperatur der Lösungen betrug 30°C. Die Detektion erfolgte mit Hilfe eines Brechungsindex(RI)-Detektors.

Die Herstellung der Polycarbonate, die in den Zusammensetzungen enthalten sind, welchen das Gemisch aus mindestens einer Carbonsäure und deren Glycerol- und/oder Diglycerolester zur Verbesserung der Fließfähigkeit zugesetzt wird, erfolgt in bekannter Weise aus Diphenolen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne, BAYER AG, "Polycarbonates" in Encyclopedia of Polymer Science and Engineering, Volume 11, Second Edition, 1988, Seiten 648-718 und schließlich auf U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien, 1992, Seiten 117-299 verwiesen.

Die Herstellung aromatischer Polycarbonate erfolgt z.B. durch Umsetzung von Dihydroxyarylverbindungen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten. Ebenso ist eine Herstellung über ein Schmelzepolymerisationsverfahren durch Umsetzung von Dihydroxyarylverbindungen mit beispielsweise Diphenylcarbonat möglich.

Für die Herstellung von Polycarbonaten geeignete Dihydroxyarylverbindungen sind solche der Formel (2)

HO-Z-OH (2),

in welcher
Z ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (2) für einen Rest der Formel (3) 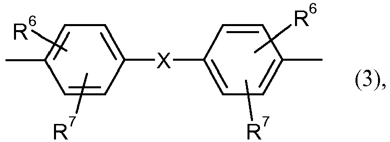 in der
R⁶ und R⁷ unabhängig voneinander für H, C₁- bis C₁₈-Alkyl-, C₁- bis C₁₈-Alkoxy, Halogen wie Cl oder Br oder für jeweils gegebenenfalls substituiertes Aryl- oder Aralkyl, bevorzugt für H oder C₁- bis C₁₂-Alkyl, besonders bevorzugt für H oder C₁- bis C₈-Alkyl und ganz besonders bevorzugt für H oder Methyl stehen, und
X für eine Einfachbindung, -SO₂-, -CO-, -O-, -S-, C₁- bis C₆-Alkylen, C₂- bis C₅-Alkyliden oder C₅- bis C₆-Cycloalkyliden, welches mit C₁- bis C₆-Alkyl, vorzugsweise Methyl oder Ethyl, substituiert sein kann, ferner für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁- bis C₅-Alkylen, C₂- bis C₅-Alkyliden, C₅- bis C₆-Cycloalkyliden, -O-, -SO-, -CO-, -S-, -SO₂-
oder für einen Rest der Formel (3a)

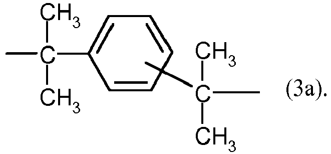

Für die Herstellung der Polycarbonate geeignete Dihydroxyarylverbindungen sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, Phthalimidine abgeleitet von Isatin- oder Phenolphthaleinderivaten sowie deren kernalkylierte, kernarylierte und kernhalogenierte Verbindungen.

Bevorzugte Dihydroxyarylverbindungen sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1-Bis-(4-hydroxyphenyl)-3,3,5-trimethylcyclohexan, sowie die Bisphenole (I) bis (III) 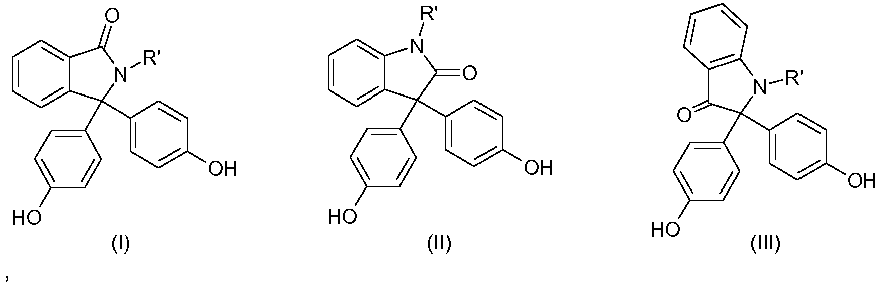 in denen R' jeweils für C₁- bis C₄-Alkyl, Aralkyl oder Aryl, bevorzugt für Methyl oder Phenyl, ganz besonders bevorzugt für Methyl, steht.

Besonders bevorzugte Dihydroxyarylverbindungen sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan und Dimethyl-Bisphenol A sowie die Diphenole der Formeln (I), (II) und (III).

Diese und weitere geeignete Dihydroxyarylverbindungen sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie "H. Schnell, Chemistry and Physics of Polycarbonates, Interscience Publishers, New York 1964" sowie in JP-A 62039/1986, JP-A 62040/1986 und JP-A 105550/1986 beschrieben.

Im Fall der Homopolycarbonate wird nur eine Dihydroxyarylverbindung eingesetzt, im Fall der Copolycarbonate werden mehrere Dihydroxyarylverbindungen eingesetzt. Die verwendeten Dihydroxyarylverbindungen, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol sowie deren Mischungen.

Bevorzugte Kettenabbrecher sind die Phenole, welche ein- oder mehrfach mit C₁- bis C₃₀-Alkylresten, linear oder verzweigt, bevorzugt unsubstituiert, oder mit tert-Butyl substituiert sind. Besonders bevorzugte Kettenabbrecher sind Phenol, Cumylphenol und/oder p-tert-Butylphenol.

Die Menge an einzusetzendem Kettenabbrecher beträgt bevorzugt 0,1 bis 5 Mol-%, bezogen auf Mole an jeweils eingesetzten Diphenolen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol-%, bezogen auf Mole an jeweils eingesetzten Dihydroxyarylverbindungen.

Die Verzweiger können entweder mit den Dihydroxyarylverbindungen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Dihydroxyarylverbindungen eingesetzt.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan, sowie von den Diphenolen der Formeln (I), (II) und (III) 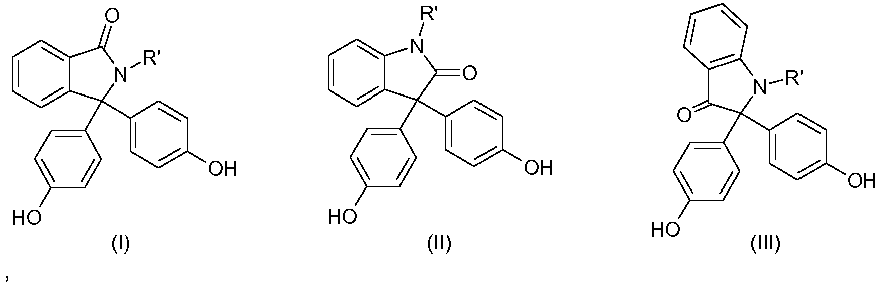 in denen R' jeweils für C₁- bis C₄-Alkyl, Aralkyl oder Aryl, bevorzugt für Methyl oder Phenyl, ganz besonders bevorzugt für Methyl, steht,
abgeleitete Homo- oder Copolycarbonate.

Bevorzugte Herstellungsweisen der erfindungsgemäß zu verwendenden Polycarbonate, einschließlich der Polyestercarbonate, sind das bekannte Grenzflächenverfahren und das bekannte Schmelzeumesterungsverfahren (vgl. z. B. WO 2004/063249 A1, WO 2001/05866 A1, WO 2000/105867, US 5,340,905 A, US 5,097,002 A, US-A 5,717,057 A).

Zur Einarbeitung von Additiven wird die Komponente A bevorzugt in Form von Pulvern, Granulaten oder aus Gemischen aus Pulvern und Granulaten eingesetzt.

Als Polycarbonat kann auch eine Mischung aus verschiedenen Polycarbonaten eingesetzt werden, z.B. aus den Polycarbonaten A1 und A2:
Die Menge des aromatischen Polycarbonats A1 beträgt bevorzugt, bezogen auf die Gesamtmenge an Polycarbonat, 25,0 bis 85,0 Gew.-%, bevorzugt 28,0 bis 84,0 Gew.-%, besonders bevorzugt 30,0 bis 83,0 Gew.-%, wobei dieses aromatische Polycarbonat auf Basis von Bisphenol A mit einer bevorzugten Schmelze-Volumenfließrate MVR von 7 bis 15 cm³/10 min, weiter bevorzugt mit einer Schmelze-Volumenfließrate MVR von 8 bis 12 cm³/10 min und besonders bevorzugt mit einer Schmelze-Volumenfließrate MVR von 8 bis 11 cm³/10 min, bestimmt gemäß ISO 1133 (Prüftemperatur 300°C, Masse 1,2 kg, DIN EN ISO 1133-1:2012-03), ist.

Die Menge des pulverförmigen aromatischen Polycarbonats A2 beträgt bevorzugt, bezogen auf die Gesamtmenge an Polycarbonat, 2,0 bis 12,0 Gew.-%, bevorzugt 3,0 bis 11,0 Gew.-%, besonders bevorzugt 4,0 bis 10,0 Gew.-%, ganz besonders bevorzugt von 5,0 bis 8,0 Gew.-%, wobei dieses aromatische Polycarbonat bevorzugt auf Basis von Bisphenol A mit einer bevorzugten Schmelze-Volumenfließrate MVR von 12 bis 65 cm³/10 min, weiter bevorzugt mit einer Schmelze-Volumenfließrate MVR von 14 bis 32 cm³/10 min, und besonders bevorzugt mit einer Schmelze-Volumenfließrate MVR von 16 bis 24 cm³/10 min und ganz besonders bevorzugt 19 cm³/10 min ± 1 cm³/10 min, bestimmt gemäß ISO 1133 (Prüftemperatur 300°C, Masse 1,2 kg, DIN EN ISO 1133-1:2012-03), ist.

Insgesamt werden in erfindungsgemäßen Zusammensetzungen 50 bis 95 Gew.-%, bevorzugt 60 bis 94 Gew.-%, weiter bevorzugt 63 bis 94 Gew.-%, besonders bevorzugt 63 bis 77 Gew.-%, aromatisches Polycarbonat eingesetzt.

### Komponente B

Als Komponente B wird Graphit, bevorzugt expandierter Graphit, alleine oder in Mischung mit nicht expandiertem Graphit, besonders bevorzugt nur expandierter Graphit, verwendet.

Bei den expandierten Graphiten sind die einzelnen Basalebenen des Graphits durch eine spezielle Behandlung auseinandergetrieben, wodurch eine Volumenvergrößerung des Graphits, bevorzugt um den Faktor 200 bis 400, resultiert. Die Herstellung von expandierten Graphiten ist unter anderem in den Schriften US 1,137,373 A, US 1,191,383 A sowie US 3,404,061 A beschrieben.

Graphite werden in Form von Fasern, Stäbchen, Kugeln, Hohlkugeln, Plättchen, in Pulverform, jeweils sowohl in aggregierter als auch in agglomerierter Form, bevorzugt in Plättchenform, in den Zusammensetzungen verwendet. Unter der plättchenförmigen Struktur wird in der vorliegenden Erfindung ein Partikel verstanden, der eine flache Geometrie aufweist. So ist die Höhe der Partikel üblicherweise deutlich geringer im Vergleich zu der Breite oder Länge der Partikel. Derartige flache Partikel können wiederum zu Gebilden agglomeriert oder aggregiert sein. Die Höhe der plättchenförmigen Primärpartikel beträgt weniger als 500 nm, bevorzugt weniger als 200 nm und besonders bevorzugt weniger als 100 nm. Durch die kleinen Größen dieser Primärpartikel kann die Form der Partikel gebogen, gekrümmt, gewellt oder andersartig deformiert sein. Die Längendimensionen der Partikel können durch Standardmethoden, zum Beispiel die Elektronenmikroskopie, ermittelt werden.

Graphit wird in den erfindungsmäßen Zusammensetzungen in Mengen von 3 bis 40 Gew.-%, bevorzugt 4 bis 36 Gew.-%, weiter bevorzugt 5 bis 35 Gew.-%, besonders bevorzugt 20 bis 35 Gew.-%, ganz besonders bevorzugt 25 bis 35 Gew.-% eingesetzt, um eine gute thermische Leitfähigkeit der thermoplastischen Zusammensetzungen zu erhalten und gleichzeitig eine hohe Verarbeitungsbreite zu gewährleisten. Sofern nicht besonders hohe thermische Leitfähigkeiten erforderlich sind, kann der Graphitgehalt in einem Bereich von 3 bis 20 Gew.-%, bevorzugt 5 bis 15 Gew.-%, gewählt werden und stattdessen können mehr Füllstoffe zugesetzt werden.

Erfindungsgemäß bevorzugt wird ein Graphit mit einer relativ hohen spezifischen Oberfläche, ermittelt als BET-Oberfläche mittels Stickstoffadsorption nach ASTM D3037, verwendet. Bevorzugt werden Graphite mit einer BET-Oberfläche von > 5 m²/g, besonders bevorzugt > 10 m²/g und ganz besonders bevorzugt > 18 m²/g in den thermoplastischen Zusammensetzungen eingesetzt.

Der D(0,5) des Graphits, bestimmt durch Siebanalyse gemäß DIN 51938:2015-09 ist bevorzugt < 1,2 mm. Bevorzugt haben die Graphite eine Partikelgrößenverteilung, welche durch den D(0,9) charakterisiert wird, von mindestens 1 mm, bevorzugt von mindestens 1,2 mm, weiter bevorzugt von mindestens 1,4 mm und noch weiter bevorzugt von mindestens 1,5 mm. Ebenfalls bevorzugt haben die Graphite eine Partikelgrößenverteilung, welche durch den D(0,5) charakterisiert wird, von mindestens 400 µm, bevorzugt von mindestens 600 µm, weiter bevorzugt von mindestens 750 µm und noch weiter bevorzugt von mindestens 850 µm. Bevorzugt weisen die Graphite eine Partikelgrößenverteilung, welche durch den D(0,1) charakterisiert wird, von mindestens 100 µm, bevorzugt von mindestens 150 µm, weiter bevorzugt von mindestens 200 µm und noch weiter bevorzugt von mindestens 250 µm auf. Die Kennzahlen D(0,1), D(0,5) und D(0, 9) werden durch Siebanalyse in Anlehnung an DIN 51938:2015-09 ermittelt.

Die verwendeten Graphite haben vorzugsweise eine Dichte, ermittelt mit Xylol, im Bereich von 2,0 g/cm³ bis 2,4 g/cm³, weiter bevorzugt von 2,1 g/cm³ bis 2,3 g/cm³ sowie noch weiter bevorzugt von 2,2 g/cm³ bis 2,27 g/cm³.

Der Kohlenstoffgehalt der erfindungsgemäß verwendeten Graphite, ermittelt nach DIN 51903 bei 800 °C für 20 Stunden, beträgt vorzugsweise > 90 %, weiter bevorzugt > 95 % und noch weiter bevorzugt > 98%.

Der Restfeuchtigkeitsgehalt der erfindungsgemäß verwendeten Graphite, ermittelt nach DIN 38414 bei 110 °C für 8 Stunden, beträgt vorzugsweise < 5 %, weiter bevorzugt < 3 % und noch weiter bevorzugt < 2 %.

Die thermische Leitfähigkeit der erfindungsgemäß verwendeten Graphite beträgt vor der Verarbeitung parallel zu den Basalebenen vorzugsweise zwischen 250 und 400 W/(m·K) sowie senkrecht zu den Basalebenen zwischen 6 bis 8 W(m·K). Der elektrische Widerstand der erfindungsgemäß verwendeten Graphite beträgt vor der Verarbeitung parallel zu den Basalebenen vorzugsweise ca. 0,001 Q·cm und ist senkrecht zu den Basalebenen kleiner 0,1 Q·cm.

Die Schüttdichte der Graphite, ermittelt nach DIN 51705, beträgt vorzugsweise zwischen 50 g/l und 250 g/l, weiter bevorzugt zwischen 65 g/l und 220 g/l und noch weiter bevorzugt zwischen 100 g/l und 200 g/l.

Bevorzugt werden Graphite in den thermoplastischen Zusammensetzungen eingesetzt, welche einen Schwefelgehalt kleiner 200 ppm aufweisen. Bevorzugt werden außerdem Graphite in den thermoplastischen Zusammensetzungen eingesetzt, welche einen auslaugfähigen Chlorionengehalt kleiner 100 ppm aufweisen. Ebenfalls bevorzugt werden Graphite in den thermoplastischen Zusammensetzungen eingesetzt, welche einen Gehalt an Nitraten und Nitriten kleiner 50 ppm aufweisen. Besonders bevorzugt werden Graphite eingesetzt, welche alle diese Grenzwerte, d.h. für den Schwefel-, den Chlorionen-, den Nitrat- und den Nitritgehalt aufweisen.

Kommerziell verfügbare, entsprechende Graphite sind unter anderem Ecophit® GFG 5, Ecophit® GFG 50, Ecophit® GFG 200, Ecophit® GFG 350, Ecophit® GFG 500, Ecophit® GFG 900, Ecophit® GFG 1200 von der Firma SGL Carbon GmbH, TIMREX® BNB90, TIMREX® KS5-44, TIMREX® KS6, TIMREX® KS150, TIMREX® SFG44, TIMREX® SFG150, TIMREX® C-THERM™ 001 und TIMREX® C-THERM™ 01 1 von der Firma TIMCAL Ltd., SC 20 O, SC 4000 O/SM und SC 8000 O/SM von der Graphit Kropfmühl AG, Mechano- Cond 1 , Mechano-Lube 2 und Mechano-Lube 4G von der Firma H.C. Carbon GmbH, Nord-Min 251 und Nord-Min 560T von der Firma Nordmann Rassmann GmbH und ASBURY A99, Asbury 230U und Asbury 3806 von der Firma Asbury Carbons.

Die Schmelzeviskositäten der Zusammensetzungen sind stark abhängig von der Menge des eingesetzten Graphits. Mit zunehmender Menge steigt auch die Schmelzeviskosität bei verschiedenen Scherraten, ermittelt nach ISO 11443:2014-04 (Kegel-Platte-Anordnung). Die bei 340 °C und einer Scherrate von 1000 1/s ermittelten Schmelzviskositäten liegen bevorzugt unter 300 Pa·s, weiter bevorzugt unter 200 Pa·s.

### Komponente C

Die erfindungsgemäßen Zusammensetzungen enthalten als Komponente C ein Gemisch, enthaltend wenigstens eine gesättigte oder ungesättigte Monocarbonsäure mit einer Kettenlänge von 6 bis 30 C-Atomen und wenigstens einen Ester dieser Monocarbonsäure auf Basis von Glycerol und/oder Diglycerol.

Isomere von Diglycerol, welche die Basis für die erfindungsgemäß eingesetzten Monocarbonsäureester bilden, sind die folgenden:

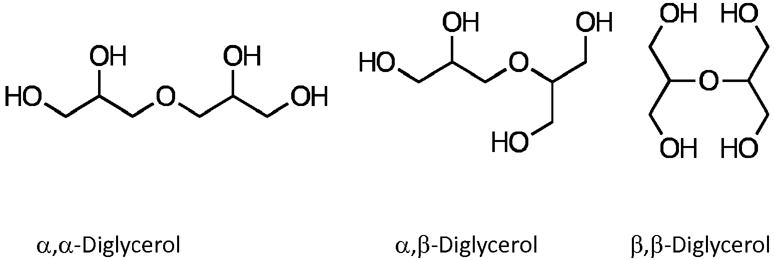

Für die ggf. erfindungsgemäß eingesetzten Ester des Diglycerols können solche Isomere dieser Formeln eingesetzt werden, die einfach oder mehrfach verestert sind.

Es können Gemische, enthaltend nur eine Monocarbonsäure und deren Ester, oder ein Gemisch, enthaltend zwei oder mehr Carbonsäuren und deren Ester, verwendet werden.

Geeignete Monocarbonsäuren sind beispielsweise Caprylsäure (C₇H₁₅COOH, Octansäure), Caprinsäure (C₉H₁₉COOH, Decansäure), Laurinsäure (C₁₁H₂₃COOH, Dodecansäure), Myristinsäure (C₁₃H₂₇COOH, Tetradecansäure), Palmitinsäure (C₁₅H₃₁COOH, Hexadecansäure), Margarinsäure (C₁₆H₃₃COOH, Heptadecansäure), Ölsäure (C₁₇H₃₃COOH, *cis*-9-Octadecensäure), Stearinsäure (C₁₇H₃₅COOH, Octadecansäure), Arachinsäure (C₁₉H₃₉COOH, Eicosansäure), Behensäure (C₂₁H₄₃COOH, Docosansäure), Lignocerinsäure (C₂₃H₄₇COOH, Tetracosansäure), Palmitoleinsäure (C₁₅H₂₉COOH, (9Z)-Hexadeca-9-ensäure), Petroselinsäure (C₁₇H₃₃COOH, (6Z)-Octadeca-6-ensäure), (9Z)-Octadeca-9-ensäure), Elaidinsäure (C₁₇H₃₃COOH, (9E)-Octadeca-9-ensäure), Linolsäure (C₁₇H₃₁COOH, (9Z,12Z)-Octadeca-9,12-diensäure), alpha- und gamma-Linolensäure (C₁₇H₂₉COOH, (9Z, 12Z, 15Z)-Octadeca-9,12,15-triensäure und (6Z,9Z,12Z)-Octadeca-6,9,12-triensäure), Arachidonsäure (C₁₉H₃₁COOH, (5Z,8Z,11Z,14Z)-Eicosa-5,8,11,14-tetraensäure), Timnodonsäure (C₁₉H₂₉COOH, (5Z,8Z,11Z,14Z,17Z)-Eicosa-5,8,11,14,17-pentaensäure) und Cervonsäure (C₂₁H₃₁COOH, (4Z,7Z,10Z,13Z,16Z,19Z)-Docosa-4,7,10,13,16,19-hexaensäure). Bevorzugt sind gesättigte aliphatische Monocarbonsäuren mit einer Kettenlänge von 8 bis 30 C-Atomen, besonders bevorzugt mit 12 bis 24 C-Atomen und ganz besonders bevorzugt mit 14 bis 24 C-Atomen.

Geeignet als Komponente C sind insbesondere Mischungen, die durch Teilveresterung von Glycerol und/oder Diglycerol mit einem Carbonsäuregemisch, enthaltend zwei oder mehr der Monocarbonsäuren mit einer Kettenlänge von 6 bis 30 C-Atomen erhalten werden, woraus ein Estergemisch resultiert. Vorzugsweise enthält das Carbonsäuregemisch Ölsäure, besonders bevorzugt zusätzlich Stearinsäure und/oder Palmitinsäure.

Vorzugsweise enthält Komponente C als Estergemisch Monoester und Diester der Ölsäure, der Palmitinsäure und/oder der Stearinsäure mit Glycerol und/oder Diglycerol und das Carbonsäuregemisch, d.h. die entsprechenden Carbonsäuren.

Beispiele sind Glycerolmonopalmitat, Glycerolmonooleat, Diglycerolmonopalmitat, Diglycerolmonooleat, Diglycerolmonostearat, Diglyceroldipalmitat oder Diglyceroldioleat. Der Anteil an Dieestern des Diglycerols ist bevorzugt kleiner als der Anteil der Monoester des Diglycerols. Komponente C enthält bevorzugt auch noch freies Glycerol und/oder Diglycerol. Komponente C kann aber auch soweit aufgereinigt sein, dass kein freies Glycerol und/oder Diglycerol mehr enthalten ist.

Ein besonders bevorzugtes Gemisch enthält 40 bis 50 Gew.-% Diglycerolmonooleat, 10 bis 20 Gew.-% Glycerinmonooleat, 10 bis 20 Gew.- Diglyceroldioleat, 1 bis 3 Gew.-% Ölsäure und jeweils bis zu 1,5 Gew.-% Stearinsäure und/oder Palmitinsäure.

Ganz besondere bevorzugte Gemische sind z. B. von Palsgaard® unter dem Handelsnamen Einar® 614, zuvor Palsgaard® Polymers PGE 8100, kommerziell erhältlich.

Die OH-Zahlen dieser Mischungen liegen vorzugsweise zwischen 135 und 300 mg KOH/g, weiter bevorzugt zwischen 180 und 300 mg KOH/g (Methode 2011-0232602-92D der Currenta GmbH & Co. OHG, Leverkusen). Die Säurezahlen dieser Mischungen liegen vorzugsweise zwischen 1 und 8 mg KOH/g, weiter bevorzugt zwischen 1 und 6 mg KOH/g (Methode 2011-0527602-14D der Currenta GmbH & Co. OHG, Leverkusen). Die Iodzahl der Mischungen nach Wijs beträgt vorzugsweise zwischen 40 und 80 g Jod/(100 g) (Methode 2201-0152902-95D der Currenta GmbH & Co. OHG, Leverkusen). Der Gehalt an freiem Glycerin und Polyglycerin beträgt bevorzugt maximal 7 Gew.-%, bezogen auf das Gesamtgewicht des Gemischs gemäß Komponente C.

Besonders bevorzugt als Komponente C ist ein Gemisch mit einem Gehalt an freien Carbonsäuren von in Summe unter 3 Gew.-%, bezogen auf das Gesamtgewicht des Gemischs C, wobei die Ölsäure den größten Anteil stellt.

Ganz besonders bevorzugt beträgt der Gehalt an Ölsäure in dem Gemisch 1,5 bis 2,5 Gew.-%, insbesondere etwa 2 Gew.-%, bezogen auf das Gesamtgewicht des Gemischs B. "Etwa" bedeutet hierbei eine Abweichung von höchstens 10 %, bevorzugt höchstens 5 %. Ganz besonders bevorzugt bilden Ölsäureester des Glycerols und des Diglycerols die Hauptbestandteile der Esteranteile der Komponente C. In Summe beträgt ihr Anteil bevorzugt mehr als 50 Gew.-%, bezogen auf das Gesamtgewicht des Gemischs C.

Die Polycarbonat-haltigen Zusammensetzungen enthalten bevorzugt 0,05 bis 5,0 Gew.-%, bevorzugt 0,5 bis 3,0 Gew.-%, weiter bevorzugt 0,5 bis 2,0 Gew.-%, besonders bevorzugt 0,6 bis 1,8 Gew.-% der Komponente C.

### Komponente D

Die erfindungsgemäßen Zusammensetzungen enthalten optional einen oder mehrere Thermo- und/oder Umesterungsstabilisatoren.

Als Thermostabilisatoren eignen sich bevorzugt Triphenylphosphin, Tris-(2,4-di-tert-butylphenyl)phosphit (Irgafos® 168), Tetrakis-(2,4-di-tert-butylphenyl)-[1,1-biphenyl]-4,4'-diylbisphosphonit, Octadecyl-3-(3,5-di-tert-butyl-4-hydroxyphenyl)-propionat (Irganox® 1076), Bis-(2,4-dicumylphenyl)-pentaerythritoldiphosphit (Doverphos® S-9228-PC), Bis-(2,6-di-tert-butyl-4-methylphenyl)-pentaerythritoldiphosphit (ADK STAB PEP-36). Sie werden allein oder im Gemisch (z. B. Irganox® B900 (Gemisch aus Irgafos® 168 und Irganox® 1076 im Verhältnis 1:3) oder Doverphos® S-9228-PC mit Irganox® B900 bzw. Irganox® 1076) eingesetzt.

Als Umesterungsstabilisatoren sind bevorzugt Phosphate oder Sulfonsäureester enthalten. Bevorzugt ist Triisooctylphosphat als Umesterungsstabilisator enthalten.

Die Thermostabilisatoren und/oder Umesterungsstabilisatoren werden bevorzugt in einer Menge bis zu 1,0 Gew.-%, besonders bevorzugt in einer Gesamtmenge von 0,005 bis 0,5 Gew.-%, ganz besonders bevorzugt 0,01 bis 0,2 Gew.-%, eingesetzt.

### Komponente E

Zusätzlich sind optional weitere Additive, bevorzugt bis zu 30,0 Gew.-%, weiter bevorzugt bis 25,0 Gew.-%, noch weiter bevorzugt 0,1 bis 20,0 Gew.-%, besonders bevorzugt 0,2 bis 10,0 Gew.-% weitere übliche Additive ("weitere Additive") enthalten. Sofern die thermischen Leitfähigkeiten etwas niedriger sein dürfen, kann der Graphitgehalt reduziert werden und entsprechend mehr Füllstoff zugesetzt werden. Bei dieser alternativen Ausführungsform, die mit den sonstigen als bevorzugt bzw. besonders bevorzugt beschriebenen Ausführungsformen kombiniert werden kann, können bis zu 35 Gew.-% weitere Additive enthalten sein.

Die Gruppe der weiteren Additive umfasst keine Thermostabilisatoren und keine Umesterungsstabilisatoren, da diese bereits als Komponente D beschrieben sind, und auch nicht die Komponenten des Gemisches C.

Solche Additive, wie sie üblicherweise bei Polycarbonat-haltigen Zusammensetzungen zugesetzt werden, sind Flammschutzmittel, Antidrippingmittel, Antioxidantien, anorganische Pigmente, Ruß, Farbmittel und/oder anorganische Füllstoffe wie Titandioxid, Silikate, Aluminiumsilikate, Talk, Kreide, Quarzpulver, Wollastonit, Glimmer/Tonschichten, Montmorillonit, Aluminiumoxid, Magnesiumoxid, Siliciumdioxid und/oder Bariumsulfat und/oder Entformungsmittel, etwa in EP-A 0 839 623, WO-A 96/15102, EP-A 0 500 496 oder "Plastics Additives Handbook", Hans Zweifel, 5th Edition 2000, Hanser Verlag, München beschrieben, in den für Polycarbonat üblichen Mengen. Diese Additive können einzeln oder auch im Gemisch zugesetzt werden.

Die Zusammensetzung ist bevorzugt frei von Entformungsmitteln, z.B. Glycerolmonostearat (GMS), da das Gemisch gemäß Komponente C selbst als Entformungsmittel wirkt.

Die Herstellung der Polycarbonat-Zusammensetzungen, enthaltend die Komponenten A bis C und ggf. D und/oder E, erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.

Es können auch Vormischungen aus Granulaten oder Granulaten und Pulvern mit den Komponenten B bis E verwendet werden.

Es können auch Vormischungen verwendet werden, die aus Lösungen der Mischungskomponenten in geeigneten Lösungsmitteln hergestellt worden sind, wobei gegebenenfalls in Lösung homogenisiert wird und das Lösungsmittel anschließend entfernt wird.

Insbesondere können hierbei die Komponenten B bis E der erfindungsgemäßen Zusammensetzung durch bekannte Verfahren oder als Masterbatch in das Polycarbonat eingebracht werden.

Die Verwendung von Masterbatchen ist zum Einbringen der Komponenten B bis E, einzeln oder in Mischung, bevorzugt.

In diesem Zusammenhang kann die erfindungsgemäße Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann können die restlichen Ausgangsstoffe einzeln und/oder ebenfalls gemischt hinzugegeben werden.

Die Zusammenführung und Durchmischung einer Vormischung in der Schmelze kann auch in der Plastifiziereinheit einer Spritzgussmaschine erfolgen. Hierbei wird die Schmelze im anschließenden Schritt direkt in einen Formkörper überführt.

Die Herstellung der Kunststoffformteile erfolgt vorzugsweise durch Spritzguss.

Die thermisch leitfähigen Polycarbonat-Zusammensetzungen, denen das Gemisch gemäß Komponente C zur Fließverbesserung zugesetzt ist, sind zur Herstellung von Bauteilen für die Elektro- und Elektronikindustrie zum Wärmemanagement, insbesondere für komplexe Kühlkörper, Kühlbleche, Wärmesenken und Gehäuse in der Beleuchtungstechnik wie z. B. Lampen oder Scheinwerfer und Extrudate, wie Rohre, Platten oder Profile, geeignet.

### Beispiele

### 1. Beschreibung der Rohstoffe und Prüfmethoden

Die in den folgenden Beispielen beschriebenen Polycarbonatzusammensetzungen wurden auf einem Extruder ZE 25 der Fa. Berstorff mit einem Durchsatz von 10 kg/h durch Compoundierung hergestellt. Die Schmelzetemperatur betrug 275 °C.
- **Komponente A-1:**: Lineares Polycarbonat auf Basis von Bisphenol A mit einer Schmelze-Volumenfließrate MVR von 16,5 cm³/10 min (gemäß DIN EN ISO 1133-1:2012-03, bei einer Prüftemperatur 250°C und 2,16 kg Belastung).
- **Komponente A-2:**: Pulver eines linearen Polycarbonates auf Basis von Bisphenol A mit einer Schmelze-Volumenfließrate MVR von 19 cm³/10 min (gemäß DIN EN ISO 1133-1:2012-03, bei einer Prüftemperatur 300°C und 1,2 kg Belastung).
- **Komponente B-1:**: Expandierter Graphit SC4000 O/MS der Firma AMG Mining Graphite / Graphit Kropfmühl GmbH, Hauzenberg, mit einem D(0,5), bestimmt durch Siebanalyse gemäß DIN 51938:2015-09, von 1000 µm.
- **Komponente B-2:**: Expandierter Graphit Ecophit GFG500 der Firma SGL Carbon SE, Wiesbaden, mit einem D(0,5), bestimmt durch Siebanalyse gemäß DIN 51938:2015-09, von 870 µm.
- **Komponente B-3:**: Expandierter Graphit Ecophit GFG900 der Firma SGL Carbon SE, Wiesbaden, mit einem D(0,5), bestimmt durch Siebanalyse gemäß 51938:2015-09, von 860 µm.
- **Komponente C:**: Gemisch; Palsgaard® Polymers PGE 8100 der Fa. Palsgaard. Es handelt sich dabei um eine Mischung, enthaltend die Ester Glycerinmonooleat (ca. 14 Gew.-%), Diglycerolmonooleat (ca. 45 Gew.-%), Diglyceroldioleat (ca. 14 Gew.-%). Die Mengen an freien Carbonsäuren in dem Gemisch betragen ca. 2 Gew.-% Ölsäure und weniger als jeweils 1 Gew.-% Stearinsäure und Palmitinsäure. Fließhilfsmittel.
- **Komponente D:**: Triisooctylphosphat (TOF) der Firma Lanxess AG als Umesterungsstabilisator.
- **Komponente E:**: Finntalc MO5SLC von Mondo Minerals B.V. Kompaktierter, laminarer Talk.
- **Komponente F:**: Poem DL-100 (Diglycerolmonolaurat) der Fa. Riken Vitamin als Fließhilfsmittel.

Die Bestimmung des **Schmelze-Volumenfließrate** (MVR) erfolgte nach DIN EN ISO 1133-1:2012-03 (bei einer Prüftemperatur von 300 °C, Masse 1,2 kg) mit dem Gerät Zwick 4106 der Firma Zwick Roell.

Die Bestimmung der **Schmelzeviskositäten** erfolgte nach ISO 11443:2014-04 mit dem Gerät Visco-Robo 45.00 der Firma Göttfert (Kegel-Platte-Anordnung).

Die **Vicat-Erweichungstemperatur** VST/B50 bzw. B120 als Maß für die Wärmeformbeständigkeit wurde gemäß DIN ISO 306:2014-3 an Prüfkörpern der Abmessung 8 mm x 10 mm x 4 mm mit einer Stempellast von 50 N und einer Aufheizgeschwindigkeit von 50°C/h bzw. 120°C/h mit dem Gerät Coesfeld Eco 2920 der Firma Coesfeld Materialtest bestimmt.

Die **Schlagzähigkeit nach Charpy** wurde nach DIN EN ISO 7391-2:2006 an einseitig angespritzten Prüfstäben der Dimension 80 mm x 10 mm x 3 mm bei Raumtemperatur gemessen.

Das **Zug-E-Modul** wurde gemäß DIN EN 527-1/-2:1996-04 an einseitig angespritzten Schulterstäben mit einem Kern der Dimension 80 mm x 10 mm x 4 mm gemessen.

Die **Zugfestigkeit, Bruchspannung und Bruchdehnung** wurden mittels Zugversuch gemäß DIN EN ISO 527-1/-2:1996-04 bestimmt.

Die **Brennbarkeit** der Proben wurde beurteilt und klassifiziert nach UL 94. Dazu wurden Probenkörper der Abmessung 125 mm x 13 mm x d(mm) hergestellt, wobei die Dicke d dabei der kleinsten Wandstärke in der vorgesehenen Anwendung entspricht. Eine V0-Klassifizierung bedeutet, dass die Flamme nach maximal 10 s von selbst erlischt. Ein brennendes Abtropfen tritt nicht auf. Ein Nachglimmen nach der zweiten Beflammung erfolgt für maximal 30 s.

Die **Wärmeleitfähigkeit in Spritzgussrichtung (in-plane)** bei 23°C wurde bestimmt gemäß ASTM E 1461:2013 an Proben mit der Dimension von 80 mm x 80 mm x 2 mm.

Die **Wärmeleitfähigkeit in Spritzgussrichtung (through-plane)** bei 23°C wurde bestimmt gemäß ASTM E 1461:2013 an Proben mit der Dimension von 80 mm x 80 mm x 2 mm.

Die **Heat Deflection Temperature (HDT)** als Maß für die Wärmeformbeständigkeitstemperatur wurde gemäß DIN EN ISO 75-1:2013-08 an Prüfkörpern der Abmessung 80 mm x 10 mm x 4 mm mit einer Last von 1,8 MPa (HDT A) oder 0,45 MPa (HDT B) mit dem Gerät HDT Vollautomat der Firma Coesfeld gemessen.

### 2. Rezepturen und Ergebnisse

**Tabelle 1: Erfindungsgemäße Zusammensetzungen 2 bis 4 und Vergleichsbeispiel 1**

| **Rezeptur** | | **V1** | **2** | **3** | **4** |
|---|---|---|---|---|---|
| **A-1** | **Gew.-%** | 68,00 | 68,00 | 68,00 | 68,00 |
| **A-2** | **Gew.-%** | 6,99 | 6,39 | 6,19 | 5,79 |
| **B-1** | **Gew.-%** | 25,00 | 25,00 | 25,00 | 25,00 |
| **C** | **Gew.-%** | - | 0,60 | 0,80 | 1,20 |
| **D** | **Gew.-%** | 0,01 | 0,01 | 0,01 | 0,01 |
| | | | | | |

| **Prüfungen:** | | | | | |
|---|---|---|---|---|---|
| **Schmelzeviskosität bei 320°C** | | | | | |
| **eta 50** | **Pa·s** | 590 | 646 | 491 | 365 |
| **eta 100** | **Pa·s** | 438 | 372 | 372 | 282 |
| **eta 200** | **Pa·s** | 319 | 242 | 245 | 218 |
| **eta 500** | **Pa·s** | 210 | 158 | 151 | 143 |
| **eta 1000** | **Pa·s** | 157 | 123 | 118 | 107 |
| **eta 1500** | **Pa·s** | 135 | 110 | 103 | 96 |
| **eta 5000** | **Pa·s** | 82 | 67 | 50 | 63 |

| **Schmelzeviskosität bei 340°C** | | | | | |
|---|---|---|---|---|---|
| **eta 50** | **Pa·s** | 428 | 477 | 288 | 234 |
| **eta 100** | **Pa·s** | 300 | 214 | 200 | 175 |
| **eta 200** | **Pa·s** | 215 | 135 | 132 | 132 |
| **eta 500** | **Pa·s** | 135 | 89 | 90 | 89 |
| **eta 1000** | **Pa·s** | 102 | 66 | 71 | 61 |
| eta **1500** | **Pa·s** | 83 | 60 | 55 | 55 |
| **eta 5000** | **Pa·s** | 50 | 40 | 29 | 31 |

**Tabelle 2: Erfindungsgemäße Zusammensetzungen 6 bis 8 und Vergleichsbeispiel 5**

| **Rezeptur** | | **V5** | **6** | **7** | **8** |
|---|---|---|---|---|---|
| **A-1** | **Gew.-%** | 68,00 | 68,00 | 68,00 | 68,00 |
| **A-2** | **Gew.-%** | 6,99 | 6,39 | 5,99 | 5,79 |
| **B-2** | **Gew.-%** | 25,00 | 25,00 | 25,00 | 25,00 |
| **C** | **Gew.-%** | - | 0,60 | 1,00 | 1,20 |
| **D** | **Gew.-%** | 0,01 | 0,01 | 0,01 | 0,01 |
| | | | | | |
| **Prüfungen:** | | | | | |

| **Schmelzeviskosität bei 320°C** | | | | | |
|---|---|---|---|---|---|
| **eta 50** | **Pa·s** | 500 | 477 | 379 | 323 |
| **eta 100** | **Pa·s** | 393 | 358 | 302 | 257 |
| **eta 200** | **Pa·s** | 305 | 256 | 229 | 204 |
| **eta 500** | **Pa·s** | 209 | 178 | 160 | 154 |
| **eta 1000** | **Pa·s** | 161 | 129 | 127 | 124 |
| **eta 1500** | **Pa·s** | 138 | 112 | 110 | 108 |
| **eta 5000** | **Pa·s** | 82 | 69 | 68 | 67 |

| **Schmelzeviskosität bei 340°C** | | | | | |
|---|---|---|---|---|---|
| **eta 50** | **Pa·s** | 358 | 253 | 229 | 234 |
| **eta 100** | **Pa·s** | 275 | 197 | 182 | 182 |
| **eta 200** | **Pa·s** | 215 | 151 | 140 | 138 |
| **eta 500** | **Pa·s** | 151 | 111 | 98 | 100 |
| **eta 1000** | **Pa·s** | 117 | 87 | 79 | 77 |
| **eta 1500** | **Pa·s** | 101 | 76 | 70 | 68 |
| **eta 5000** | **Pa·s** | 63 | 49 | 47 | 45 |

| **Schmelzeviskosität bei 360°C** | | | | | |
|---|---|---|---|---|---|
| **eta 50** | **Pa·s** | 281 | 168 | 126 | 85 |
| **eta 100** | **Pa·s** | 220 | 126 | 105 | 72 |
| **eta 200** | **Pa·s** | 169 | 95 | 84 | 63 |
| **eta 500** | **Pa·s** | 114 | 68 | 60 | 49 |
| **eta 1000** | **Pa·s** | 86 | 51 | 48 | 41 |
| **eta 1500** | **Pa·s** | 73 | | 44 | 38 |
| **eta 5000** | **Pa·s** | 48 | | 30 | 27 |

**Tabelle 3: Erfindungsgemäße Zusammensetzungen 9 bis 13**

| **Rezeptur** | | **9** | **10** | **11** | **12** | **13** |
|---|---|---|---|---|---|---|
| **A-1** | **Gew.-%** | 68,00 | 68,00 | 68,00 | 68,00 | 58,00 |
| **A-2** | **Gew.-%** | 6,19 | 5,69 | 5,19 | 5,19 | 5,19 |
| **B-1** | **Gew.-%** | 25,00 | 25,00 | 25,00 | | |
| **B-2** | **Gew.-%** | | | | 25,00 | 35,00 |
| **C** | **Gew.-%** | 0,80 | 1,30 | 1,80 | 1,8 | 1,8 |
| **D** | **Gew.-%** | 0,01 | 0,01 | 0,01 | 0,01 | 0,01 |
| | | | | | | |
| **Prüfungen:** | | | | | | |
| **Asche Gehalt 525°C / 2h** | | 24,17 | 23,87 | 24,05 | 26,4 | 35,95 |

| **Schmelzeviskosität bei 300°C** | | | | | | |
|---|---|---|---|---|---|---|
| **eta 50** | **Pa·s** | 772 | 618 | 519 | 379 | 562 |
| **eta 100** | **Pa·s** | 583 | 501 | 398 | 274 | 407 |
| **eta 200** | **Pa·s** | 439 | 377 | 326 | 200 | 324 |
| **eta 500** | **Pa·s** | 295 | 259 | 224 | 139 | 224 |
| **eta 1000** | **Pa·s** | 222 | 189 | 174 | 107 | 174 |
| **eta 1500** | **Pa·s** | 190 | 160 | 146 | 91 | 146 |
| **eta 5000** | **Pa·s** | 104 | 91 | 84 | 60 | 89 |

| **Schmelzeviskosität bei 330°C** | | | | | | |
|---|---|---|---|---|---|---|
| **eta 50** | **Pa·s** | 392 | 288 | 269 | 239 | 253 |
| **eta 100** | **Pa·s** | 295 | 224 | 204 | 175 | 197 |
| **eta 200** | **Pa·s** | 211 | 174 | 154 | 123 | 140 |
| **eta 500** | **Pa·s** | 147 | 119 | 105 | 83 | 94 |
| **eta 1000** | **Pa·s** | 108 | 89 | 76 | 64 | 72 |
| **eta 1500** | **Pa·s** | 89 | 76 | 66 | 56 | 62 |
| **eta 5000** | **Pa·s** | 58 | 49 | 42 | 39 | 44 |

| **Thermische Prüfungen** | | | | | | |
|---|---|---|---|---|---|---|
| **Vicat VST B50** | **°C** | 138,6 | 133,7 | 134,1 | 133,0 | 134,1 |
| **Vicat VST B120** | **°C** | 140,0 | 135,0 | 132,3 | 134,6 | 134,9 |
| **HDT A** | **°C** | 132,5 | 128,0 | 127,1 | 127,9 | 129,2 |
| **HDT B** | **°C** | 138,0 | 133,5 | 132,3 | 133,2 | 135,1 |
| **Zugversuch** | | | | | | |
| **Zug-Modul** | **N/mm²** | 5181 | 5192 | 5585 | 5342 | 6610 |
| **Zugfestigkeit** | **N/mm²** | 39,0 | 38,0 | 39,0 | 37,0 | 36,0 |
| **Bruchspannung** | **N/mm²** | 39,0 | 38,0 | 39,0 | 37,0 | 36,0 |
| **Bruchdehnung** | **%** | 1,1 | 1,0 | 1,0 | 1,0 | 0,7 |
| **Charpy-Schlagzähigkeit ISO7391/179eU 4 mm** | **kJ/m²** | 7s | 6s | 6s | 6s | 4s |
| **UL94V in 2,0 mm** | | | | | | |
| **(48h, 23°C )** | | n.b. | n.b. | n.b. | V0 | V0 |
| **Einzelbew. V0/V1/V2/Vn.b.** | | 1/2/-/2 | 1/1/-/3 | -/-/-/5 | 5/-/-/- | 5/-/-/- |
| **Nach brennzeit** | **s** | >113 | >127 | >180 | 10 | 10 |
| **Nach brennzeit (1. Brennsatz)** | s | - | - | - | - | - |
| **(7d, 70°C)** | | n.b. | V1 | n.b. | V0 | V0 |
| **Einzelbewertung V0/V1/V2/Vn.b.** | | 1/2/-/2 | 2/3/-/- | 3/-/-/2 | 5/-/-/- | 5/-/-/- |
| **Nach brennzeit** | s | >109 | 45 | >94 | 13 | 10 |
| **Nach brennzeit (1. Brennsatz)** | s | - | >45 | 51 | - | - |
| **Gesamtbewertung** | | n.b. | n.b. | n.b. | V0 | V0 |
| **Thermischer Längenausdehnungskoeff izient - quer - längs** | | | | | | |
| | **ppm·K⁻¹** | 44,59 | 44,28 | 44,26 | 44,91 | 36,2 |
| | **ppm·K⁻¹** | 32,38 | 32,13 | 28,6 | 31,56 | 19,47 |
| **thermische Leitfähigkeit senkrecht zur Spritzrichtung (through plane)** | | | | | | |
| Dicke | **mm** | 1,985 | 1,985 | 1,989 | 1,986 | 1,983 |
| Temperaturleitfähigkeit | **mm²/s** | 0,641 | 0,697 | 0,642 | 0,626 | 1,016 |
| Wärmeleitfähigkeit | **W/(m·K)** | 1,04 | 1,1 | 1 | 0,98 | 1,58 |
| Dichte | **g/cm³** | 1,34 | 1,33 | 1,37 | 1,34 | 1,42 |
| Cp | **J/(g·K)** | 1,172 | 1,186 | 1,14 | 1,165 | 1,098 |
| **thermische Leitfähigkeit in Spritzrichtung (in plane)** | | | | | | |
| Dicke | **mm** | 2,067 | 2,046 | 2,056 | 2,019 | 1,979 |
| Temperaturleitfähigkeit | **mm²/s** | 6,153 | 6,28 | 6,314 | 7,01 | 8,043 |
| Wärmeleitfähigkeit | **W/(m·K)** | 9,65 | 9,91 | 9,5 | 10,94 | 12,53 |

| | | | | | | |
|---|---|---|---|---|---|---|
| n.b.: nicht bestanden | | | | | | |

Die Vergleichsbeispiele V1 und V5, welche das Gemisch C nicht enthalten, haben eine deutlich geringere Fließfähigkeit bei verschiedenen Temperaturen über den gesamten Scherbereich, dargestellt an den Schmelzeviskositäten, als die erfindungsgemäßen Beispiele.

**Tabelle 4: Erfindungsgemäße Zusammensetzungen 14 bis 25**

| **Rezeptur** | | **14** | **15** | **16** | **17** | **18** | **19** | **20** | **21** | **22** | **23** | **24** | **25** |
|---|---|---|---|---|---|---|---|---|---|---|---|---|---|
| **A-1** | Gew.-% | 75,00 | 75,00 | 45,00 | 45,00 | 75,00 | 75,00 | 55,00 | 55,00 | 22,00 | 75,00 | 60,00 | 60,00 |
| **A-2** | Gew.-% | 18,80 | 18,50 | 18,80 | 18,50 | 13,80 | 13,50 | 13,80 | 13,50 | 8,80 | 8,50 | 8,80 | 8,50 |
| **B-3** | Gew.-% | 5,00 | 5,00 | 5,00 | 5,00 | 10,00 | 10,00 | 10,00 | 10,00 | 15,00 | 15,00 | 15,00 | 15,00 |
| **C** | Gew.-% | 1,20 | 1,50 | 1,20 | 1,50 | 1,20 | 1,50 | 1,20 | 1,50 | 1,20 | 1,50 | 1,20 | 1,50 |
| **E** | Gew.-% | | | 30,00 | 30,00 | | | 20,00 | 20,00 | | | 15,00 | 15,00 |
| | | | | | | | | | | | | | |
| **Prüfungen:** | | | | | | | | | | | | | |

| **Schmelzeviskosität bei 300°C** | | | | | | | | | | | | | |
|---|---|---|---|---|---|---|---|---|---|---|---|---|---|
| **eta 50** | **Pa·s** | | | | | | | | | | | | |
| **eta 100** | **Pa·s** | | | | | | | | | | | | |
| **eta 200** | **Pa·s** | | | | | | | | | 376 | | | 418 |
| **eta 500** | **Pa·s** | 199 | 152 | | | 241 | 192 | 157 | | 263 | 160 | 206 | 293 |
| **eta 1000** | **Pa·s** | 168 | 137 | | | 196 | 160 | 124 | 99 | 207 | 129 | 179 | 221 |
| **eta 1500** | **Pa·s** | 150 | 125 | 57 | 59 | 171 | 142 | 109 | 90 | 176 | 112 | 157 | 187 |
| **eta 5000** | **Pa·s** | 88 | 81 | 40 | 39 | 99 | 87 | 67 | 62 | 102 | 70 | 91 | 108 |
| **Schmelzeviskosität bei 330°C** | | | | | | | | | | | | | |
| **eta 50** | **Pa·s** | | | - | | | | | | | | | |
| **eta 100** | **Pa·s** | | | | | | | | | | | | |
| **eta 200** | **Pa·s** | | | | | | | | | | | | |
| **eta 500** | **Pa·s** | | | | | | | | | | | | |
| **eta 1000** | **Pa·s** | 83 | | | | 75 | | | | | | | |
| **eta 1500** | **Pa·s** | 75 | 60 | | | 71 | 48 | | | 51 | | 61 | 54 |
| **eta 5000** | **Pa·s** | 52 | 45 | | | 53 | 38 | | | 35 | | 37 | 38 |

| **Thermische Prüfungen** | | | | | | | | | | | | | |
|---|---|---|---|---|---|---|---|---|---|---|---|---|---|
| **Vicat VST B50** | **°C** | 136,5 | 134,6 | 128,9 | 126,5 | 135,8 | 133,1 | 132,6 | 130,4 | 134,4 | 131,8 | 135,8 | 133,4 |
| **Vicat VST B120** | **°C** | 137,7 | 136,1 | 130,6 | 128,1 | 137,1 | 134,8 | 134,2 | 132,0 | 136,4 | 133,9 | 137,3 | 134,9 |
| **HDT A** | **°C** | 118,4 | 116,8 | 120,2 | 117,3 | 120,7 | 117,8 | 123,4 | 121,0 | 123,6 | 120,8 | 127,9 | 125,5 |
| **HDT B** | **°C** | 131,9 | 129,8 | 127,1 | 124,0 | 132,5 | 130,1 | 130,9 | 128,4 | 132,7 | 130,3 | 134,5 | 132,2 |
| **Wärmeleitfähigkeit (in plane)** | **W/(m*K)** | 0,62 | 0,65 | 2,77 | 2,78 | 1,8 | 1,89 | 3,7 | 4,34 | 4,42 | 4,22 | 6,19 | 6,98 |

| **Thermischer Längenausdehnungskoeff -izient** | | | | | | | | | | | | | |
|---|---|---|---|---|---|---|---|---|---|---|---|---|---|
| **quer** | **ppm*K⁻¹** | 63,61 | 64,28 | 45,91 | 42,37 | 58,75 | 58,79 | 46,66 | 45,39 | 54,34 | 53,06 | 46,48 | 46,46 |
| **längs** | **ppm*K⁻¹** | 62,87 | 58,89 | 28,35 | 30,93 | 54,28 | 46,92 | 31,73 | 32,62 | 42,17 | 39,07 | 27,60 | 32,68 |

In den Mischungen mit den Komponenten A, B und C führt der Zusatz von Komponente E jeweils zu einer Erhöhung der thermischen Leitfähigkeit sowie auch zu einer Reduktion des thermischen Längenausdehnungskoeffizienten.

**Tabelle 5: Erfindungsgemäße Zusammensetzungen 26 und 27 sowie Vergleichsbeispiele 6 und 7**

| **Rezeptur** | | **26** | **27** | **V6** | **V7** |
|---|---|---|---|---|---|
| **A-1** | **Gew.-%** | 68,00 | 58,00 | 68,00 | 58,00 |
| **A-2** | **Gew.-%** | 5,19 | 5,19 | 5,19 | 5,19 |
| **B-3** | **Gew.-%** | 25,00 | 35,00 | 25,00 | 35,00 |
| **C** | **Gew.-%** | 1,80 | 1,80 | | |
| **D** | **Gew.-%** | 0,01 | 0,01 | 0,01 | 0,01 |
| **F** | **Gew.-%** | | | 1,80 | 1,80 |
| | | | | | |
| **Prüfungen:** | | | | | |

| **Schmelzeviskosität bei 330°C** | | | | | |
|---|---|---|---|---|---|
| **eta 50** | **Pa·s** | 239 | 253 | 182 | 229 |
| **eta 100** | **Pa·s** | 175 | 197 | 132 | 161 |
| **eta 200** | **Pa·s** | 123 | 140 | 95 | 115 |
| **eta 500** | **Pa·s** | 83 | 94 | 68 | 78 |
| **eta 1000** | **Pa·s** | 64 | 72 | 49 | 58 |
| **eta 1500** | **Pa·s** | 56 | 62 | 41 | 49 |
| **eta 5000** | **Pa·s** | 39 | 44 | 26 | 33 |

| **Thermische Prüfungen** | | | | | |
|---|---|---|---|---|---|
| **Vicat VST B50** | **°C** | 133,0 | 134,1 | 127,0 | 127,8 |
| **Vicat VST B120** | **°C** | 134,6 | 134,9 | 128,7 | 129,6 |
| **HDT A** | **°C** | 127,9 | 129,2 | 120,1 | 120,7 |
| **HDT B** | **°C** | 133,2 | 135,1 | 127,8 | 127,4 |

Wie zu erkennen ist, ist gegenüber der erfindungsgemäß eingesetzten Komponente C ein Diglycerolester ohne freie Säure nachteilig. Die erfindungsgemäßen Zusammensetzungen zeigen gegenüber den gut fließfähigen Zusammensetzungen, die lediglich Diglycerolester, ohne Säure, enthalten vergleichbare rheologische Eigenschaften und dabei deutlich höhere Vicat-Temperaturen sowie HDT.

## Patentansprüche

1. Zusammensetzung, enthaltend
A) 50 bis 95 Gew.-% aromatisches Polycarbonat,
B) 3 bis 40 Gew.-% Graphit und
C) 0,05 Gew.-% bis 5,0 Gew.-% eines Gemischs, enthaltend wenigstens eine gesättigte oder ungesättigte Monocarbonsäure mit einer Kettenlänge von 6 bis 30 C-Atomen und wenigstens einen Ester dieser Monocarbonsäure auf Basis von Glycerol und/oder Diglycerol.

2. Zusammensetzung nach Anspruch 1, enthaltend
A) 62 bis 95 Gew.-% aromatisches Polycarbonat,
B) 4 bis 36 Gew.-% Graphit,
C) 0,2 Gew.-% bis 3,0 Gew.-% eines Gemischs, enthaltend wenigstens eine gesättigte oder ungesättigte Monocarbonsäure mit einer Kettenlänge von 6 bis 30 C-Atomen und wenigstens einen Ester dieser Monocarbonsäure auf Basis von Glycerol und/oder Diglycerol,
D) 0,005 bis 0,5 Gew.-% Thermostabilisator und/oder Umesterungsstabilisator und
E) 0,1 bis 30 Gew.-% weitere Additive.

3. Zusammensetzung nach Anspruch 1 oder 2, bestehend aus
A) 63 bis 77 Gew.-% aromatischem Polycarbonat,
B) 20 bis 36 Gew.-% Graphit,
C) 0,5 Gew.-% bis 2,0 Gew.-% eines Gemischs, enthaltend wenigstens eine gesättigte oder ungesättigte Monocarbonsäure mit einer Kettenlänge von 6 bis 30 C-Atomen und wenigstens einen Ester dieser Monocarbonsäure auf Basis von Glycerol und/oder Diglycerol,
D) 0,01 bis 0,2 Gew.-% Thermostabilisator und/oder Umesterungsstabilisator und
E) 0,2 bis 15 Gew.-% weiteren Additiven.

4. Zusammensetzung nach einem der vorhergehenden Ansprüche, enthaltend 25 bis 35 Gew.-% Graphit und 0,6 bis 1,8 Gew.-% des Gemisches gemäß Komponente C.

5. Zusammensetzung nach einem der vorhergehenden Ansprüche, wobei als Carbonsäure Ölsäure enthalten ist und als Ester wenigstens ein Ester der Ölsäure auf Basis von Glycerol und/oder Diglycerol.

6. Zusammensetzung nach einem der vorhergehenden Ansprüche, wobei Komponente C mehr als 50 Gew.-% an Ölsäureestern des Glycerols und/oder Diglycerols, bezogen auf das Gesamtgewicht der Komponente C, und weniger als 3 Gew.-% an freien Carbonsäuren, bezogen auf das Gesamtgewicht der Komponente C enthält.

7. Zusammensetzung nach einem der vorhergehenden Ansprüche, wobei Ölsäure den größten Anteil an freien Carbonsäuren stellt.

8. Zusammensetzung nach einem der vorhergehenden Ansprüche, wobei Komponente C ein Carbonsäuregemisch umfasst, enthaltend zwei oder mehr Monocarbonsäuren mit einer Kettenlänge von 6 bis 30 C-Atomen, und ein Estergemisch aus Estern des Glycerols und Diglycerols dieser Monocarbonsäuren.

9. Zusammensetzung nach einem der vorhergehenden Ansprüche, wobei als Carbonsäuren Stearinsäure und/oder Palmitinsäure enthalten ist/sind.

10. Zusammensetzung nach einem der vorhergehenden Ansprüche, wobei der Graphit gemäß Komponente B expandierter Graphit ist.

11. Zusammensetzung nach einem der vorhergehenden Ansprüche, wobei das Gemisch gemäß Komponente C 40 bis 50 Gew.-% Diglycerolmonooleat, 10 bis 20 Gew.-% Glycerinmonooleat, 10 bis 20 Gew.- Diglyceroldioleat, 1 bis 3 Gew.-% Ölsäure und bis zu 1,5 Gew.-% Stearinsäure und bis zu Palmitinsäure enthält.

12. Formteil aus einer Zusammensetzung nach einem der Ansprüche 1 bis 11.

13. Formteil nach Anspruch 12, aufweisend eine Wandstärke kleiner 3 mm.

14. Formteil nach Anspruch 13, aufweisend eine Wandstärke kleiner 1,5 mm.

15. Formteil nach einem der Ansprüche 12 bis 14, wobei das Formteil eine Wärmesenke, ein Kühlkörper, ein Gehäuse oder ein Extrudat ist.

## Claims

1. Composition comprising
A) 50 to 95 wt% of aromatic polycarbonate,
B) 3 to 40 wt% of graphite and
C) 0.05 wt% to 5.0 wt% of a mixture containing at least one saturated or unsaturated monocarboxylic acid having a chain length of 6 to 30 carbon atoms and at least one ester of this monocarboxylic acid based on glycerol and/or diglycerol.

2. Composition according to Claim 1 comprising
A) 62 to 95 wt% of aromatic polycarbonate,
B) 4 to 36 wt% of graphite,
C) 0.2 wt% to 3.0 wt% of a mixture containing at least one saturated or unsaturated monocarboxylic acid having a chain length of 6 to 30 carbon atoms and at least one ester of this monocarboxylic acid based on glycerol and/or diglycerol.
D) 0.005 to 0.5 wt% of heat stabilizer and/or transesterification stabilizer and
E) 0.1 to 30 wt% of further additives.

3. Composition according to Claim 1 or 2, consisting of
A) 63 to 77 wt% of aromatic polycarbonate,
B) 20 to 36 wt% of graphite,
C) 0.5 wt% to 2.0 wt% of a mixture containing at least one saturated or unsaturated monocarboxylic acid having a chain length of 6 to 30 carbon atoms and at least one ester of this monocarboxylic acid based on glycerol and/or diglycerol,
D) 0.01 to 0.2 wt% of heat stabilizer and/or transesterification stabilizer and
E) 0.2 to 15 wt% of further additives.

4. Composition according to any of the preceding claims, containing 25 to 35 wt% of graphite and 0.6 to 1.8 wt% of the mixture of component C.

5. Composition according to any of the preceding claims, wherein as carboxylic acid oleic acid is present and as ester at least one ester of oleic acid based on glycerol and/or diglycerol is present.

6. Composition according to any of the preceding claims, wherein component C contains more than 50 wt% of oleic esters of glycerol and/or diglycerol based on the total weight of component C and less than 3 wt% of free carboxylic acids based on the total weight of component C.

7. Composition according to any of the preceding claims, wherein oleic acid makes up the greatest proportion of free carboxylic acids.

8. Composition according to any of the preceding claims, wherein component C comprises a carboxylic acid mixture containing two or more monocarboxylic acids having a chain length of 6 to 30 carbon atoms and an ester mixture composed of esters of glycerol and diglycerol of these monocarboxylic acids.

9. Composition according to any of the preceding claims, wherein as carboxylic acids stearic acid and/or palmitic acid is/are present.

10. Composition according to any of the preceding claims, wherein the graphite of component B is expanded graphite.

11. Composition according to any of the preceding claims, wherein the mixture of component C contains 40 to 50 wt% of diglycerol monooleate, 10 to 20 wt% of glycerol monooleate, 10 to 20 wt% of diglycerol dioleate, 1 to 3 wt% of oleic acid and up to 1.5 wt% of stearic acid and up to of palmitic acid.

12. Moulding made of a composition according to any of Claims 1 to 11.

13. Moulding according to Claim 12, having a wall thickness of less than 3 mm.

14. Moulding according to Claim 13, having a wall thickness of less than 1.5 mm.

15. Moulding according to any of Claims 12 to 14, wherein the moulding is a heat sink, a housing or an extrudate.

## Revendications

1. Composition, contenant :
A) 50 à 95 % en poids de polycarbonate aromatique,
B) 3 à 40 % en poids de graphite, et
C) 0,05 % en poids à 5,0 % en poids d'un mélange, contenant au moins un acide monocarboxylique saturé ou insaturé ayant une longueur de chaîne de 6 à 30 atomes C et au moins un ester de cet acide monocarboxylique à base de glycérol et/ou de diglycérol.

2. Composition selon la revendication 1, contenant :
A) 62 à 95 % en poids de polycarbonate aromatique,
B) 4 à 36 % en poids de graphite,
C) 0,2 % en poids à 3,0 % en poids d'un mélange, contenant au moins un acide monocarboxylique saturé ou insaturé ayant une longueur de chaîne de 6 à 30 atomes C et au moins un ester de cet acide monocarboxylique à base de glycérol et/ou de diglycérol,
D) 0,005 à 0,5 % en poids d'un thermostabilisateur et/ou d'un stabilisateur de transestérification, et
E) 0,1 à 30 % en poids d'additifs supplémentaires.

3. Composition selon la revendication 1 ou 2, constituée par :
A) 63 à 77 % en poids de polycarbonate aromatique,
B) 20 à 36 % en poids de graphite,
C) 0,5 % en poids à 2,0 % en poids d'un mélange, contenant au moins un acide monocarboxylique saturé ou insaturé ayant une longueur de chaîne de 6 à 30 atomes C et au moins un ester de cet acide monocarboxylique à base de glycérol et/ou de diglycérol,
D) 0,01 à 0,2 % en poids d'un thermostabilisateur et/ou d'un stabilisateur de transestérification, et
E) 0,2 à 15 % en poids d'additifs supplémentaires.

4. Composition selon l'une quelconque des revendications précédentes, contenant 25 à 35 % en poids de graphite et 0,6 à 1,8 % en poids du mélange selon le composant C.

5. Composition selon l'une quelconque des revendications précédentes, dans laquelle de l'acide oléique est contenu en tant qu'acide carboxylique et, en tant qu'ester, au moins un ester de l'acide oléique à base de glycérol et/ou de diglycérol.

6. Composition selon l'une quelconque des revendications précédentes, dans laquelle le composant C contient plus de 50 % en poids d'esters de l'acide oléique de glycérol et/ou de diglycérol, par rapport au poids total du composant C, et moins de 3 % en poids d'acides carboxyliques libres, par rapport au poids total du composant C.

7. Composition selon l'une quelconque des revendications précédentes, dans laquelle l'acide oléique représente la plus grande proportion d'acides carboxyliques libres.

8. Composition selon l'une quelconque des revendications précédentes, dans laquelle le composant C comprend un mélange d'acides carboxyliques, contenant deux ou davantage d'acides monocarboxyliques ayant une longueur de chaîne de 6 à 30 atomes C, et un mélange d'esters constitué par des esters de glycérol et de diglycérol de ces acides monocarboxyliques.

9. Composition selon l'une quelconque des revendications précédentes, dans laquelle de l'acide stéarique et/ou de l'acide palmitique sont contenus en tant qu'acides carboxyliques.

10. Composition selon l'une quelconque des revendications précédentes, dans laquelle le graphite selon le composant B est du graphite expansé.

11. Composition selon l'une quelconque des revendications précédentes, dans laquelle le mélange selon le composant C contient 40 à 50 % en poids de monooléate de diglycérol, 10 à 20 % en poids de monooléate de glycérine, 10 à 20 % en poids de dioléate de diglycérol, 1 à 3 % en poids d'acide oléique et jusqu'à 1,5 % en poids d'acide stéarique et jusqu'à d'acide palmitique.

12. Pièce moulée en une composition selon l'une quelconque des revendications 1 à 11.

13. Pièce moulée selon la revendication 12, présentant une épaisseur de paroi inférieure à 3 mm.

14. Pièce moulée selon la revendication 13, présentant une épaisseur de paroi inférieure à 1,5 mm.

15. Pièce moulée selon l'une quelconque des revendications 12 à 14, dans laquelle la pièce moulée est un puit thermique, un corps réfrigérant, un boîtier ou un extrudat.
